# EUROPEAN PATENT APPLICATION

(11) **EP 3 900 558 A1**
(43) Date of publication of application: **27.10.2021**
(21) Application number: 20170660.3
(22) Date of filing: 21.04.2020
(51) Int. Cl.: A41D 13/11, A62B 23/00

(54) **RESPIRATORY FACE MASKS**

(71) Applicant: O'Neills Irish International Sports Company Limited, Dublin 12 (IE)
(72) Inventor: The designation of the inventor has not yet been filed
(74) Representative: MacLachlan & Donaldson

(57) **Abstract**

Face mask (11) comprises a respiratory face mask article (12) and two elastic bands (16), respective ends of which are anchored to respective ends of the face mask article (12). Face mask article (12) is multi-layered, comprising; a first, outer, layer (18) of synthetic fabric, preferably quick-drying synthetic fabric; a second, inner, layer (20) of antibacterial / antiviral synthetic fabric: a third, inner, multilayer filter assembly (22); a fourth, inner, layer (24) of antibacterial / antiviral synthetic fabric; and a fifth, outer, layer (26) of synthetic fabric, preferably quick-drying synthetic fabric e.g. polyester or nylon.

## Description

### FIELD OF THE INVENTION

This invention relates to respiratory face masks. The invention provides a respiratory face mask filter assembly. The invention also provides a method of making a respiratory face mask filter assembly. The invention further provides a respiratory face mask article. The invention also provides a respiratory face mask casing portion. Still further, the invention provides a respiratory face mask.

### SUMMARY OF THE INVENTION

In accordance with the invention, broadly, is provided a seamless respiratory face mask configured to be worn on the face of a user such that it extends across the nose and mouth of the user, the face mask comprising multiple layers of flexible fabric that includes, in series,
a first, outer, layer of synthetic fabric, preferably quick-drying synthetic fabric e.g. polyester or nylon; face-to-face contiguous with
a second, inner, layer of antibacterial / antiviral synthetic fabric, preferably terry fabric of copper-coated nylon yarn; face-to-face contiguous with
a third, inner, layer of synthetic non-woven fabric of lighter weight per area (gsm), preferably 70 gsm polypropylene; face-to-face contiguous with
a fourth, innermost, layer of synthetic non-woven fabric of heavier weight per area (gsm), preferably 100 gsm polypropylene; face-to-face contiguous with
a fifth, inner, layer of synthetic non-woven fabric of lighter weight per area (gsm), preferably 70 gsm polypropylene; face-to-face contiguous with
a sixth, inner, layer of antibacterial / antiviral synthetic fabric, preferably terry fabric of copper-coated nylon yarn; face-to-face contiguous with
a seventh, outer, layer of synthetic fabric, preferably quick-drying synthetic fabric e.g. polyester or nylon.

The face mask may be a face mask according to the invention, as hereinafter described.

The third, fourth and fifth layers may be provided by a face mask filter assembly according to the invention, as hereinafter described.

The first, second, sixth and seventh layers may be provided by a face mask casing portion according to the invention, as hereinafter described.

The first to seventh layers may be provided by a face mask article according to the invention, as hereinafter described.

At least some of the layers of fabric may be elastic, for wearing comfort and integrity of mounting.

More specifically, in accordance with one aspect of the invention is provided a respiratory face mask filter assembly that comprises a plurality of layers of melt-spun non-woven fabric, including at least one heavier weight per area (grams per square meter, or "gsm") layer of melt-spun non-woven fabric and at least one lighter weight per area (gsm) layer of melt spun non-woven fabric, located contiguously face-to-face.

More specifically, the face mask filter assembly may comprise
a first layer of melt-spun non-woven fabric;
a second layer of melt-spun non-woven fabric; and
a third layer of melt-spun non-woven fabric,
wherein
the first, second and third layers are located contiguously and face-to-face;
the second layer is located between the first and third layers;
the first and third layers are respectively bonded to respective faces of second layer; and
the first and third layers have weight per area specifications smaller than the second layer.

In use, the filter assembly may provide or be located in a breathing zone of a respiratory face mask worn by a user, thus in use being located over the nose and mouth of the user, for the user to breathe through at least a part of the filter assembly.

The melt-spun non-woven fabric of the first, second and third layers may be polypropylene.

In a preferred embodiment of the invention, the first and third layers of fabric each has a weight per area of about 70 gsm, and the second layer of fabric has a weight per area of about 100 gsm.

The first layer may be an operatively distal layer that would be located, in use, distally from the face of a user of a respiratory face mask that includes the filter assembly.

The third layer may be an operatively proximal layer that would be located, in use, proximally to the face of a user of a respiratory mask that includes the filter assembly.

Thus, the second layer would be an operatively intermediate layer, located between the distal (first) and proximal (third) layers in use.

Bonding of the first layer to the second layer may be full bonding across their entire contiguous faces.

Bonding of the third layer to the second layer may be partial bonding along parts of their contiguous faces, e.g. along peripheral edge portions of their contiguous faces. Thus, one or more portions, e.g. a central portion and/or one or more edge portions, of the contiguous faces of the third and second layers may be loose from each other, i.e. not bonded to each other.

Bonding of the first and third layers to the second layer may have been effected through the application of heat, i.e. by means of heat bonding.

More specifically, the first layer may have been bonded to the second layer by the application of heat at about 180°C for a predetermined time period, e.g. about 30 seconds.

Similarly, the third layer may have been bonded to the second layer by the application of heat at about 150°C for a predetermined time period, e.g. about 30 seconds.

The invention extends, as a separate aspect thereof, to a method of making a respiratory face mask filter assembly as hereinbefore described, by contiguously locating a plurality of layers of melt-spun non-woven fabric, comprising at least one heavier weight per area (gsm) layer of melt-spun non-woven fabric and at least one lighter weight per area (gsm) layer of melt spun non-woven fabric.

More specifically, the method may include locating contiguously face-to-face three layers of melt-spun non-woven fabric, as hereinbefore described, in the manner hereinbefore described, and then bonding the first and third layers respectively to the second layer, in the manner hereinbefore described.

In accordance with another aspect of the invention is provided a respiratory face mask article that comprises a respiratory face mask filter assembly as hereinbefore described.

The face mask article may be configured to be mounted to, and thus worn, on the face of a user, such that the face mask filter extends at least across the nose and mouth of the user.

In this regard, the face mask article may comprise mounting members configured to mount the face mask article to the face of a user, wherein the face mask article and the mounting members thus provide a face mask.

For example, the mounting members may comprise one or more elastic bands that locate, in use, at the back of a user's head or, although less desirably, behind a user's ears, thus locating the face mask article across the nose and mouth of the user.

In a first embodiment of the invention, the face mask article may consist of the filter assembly.

In a second, more preferred, embodiment of the invention, the face mask article may include a face mask casing portion in which the filter assembly is located.

In such a second embodiment, the face mask article may, in a removable filter assembly configuration, comprise the face mask casing portion and the filter assembly removably located or locatable in the face mask casing portion, i.e. such that the filter assembly may be readily removed from the face mask casing portion and, optionally, be replaced with a washed filter assembly or a new filter assembly.

Alternatively, in such a second embodiment, the face mask article may, in a non-removable filter assembly configuration, comprise the face mask casing portion and the filter assembly non-removably located therein, i.e. such that the filter assembly is not readily removable from the face mask casing portion.

When the face mask article comprises the face mask casing portion and the filter assembly, the filter assembly may be located in the face mask casing portion such that, by mounting the face mask casing portion to a face of a user such that it extends across the nose and mouth of the user, the filter assembly would also extend across the nose and mouth of the user, for the user to breathe through the filter assembly.

The face mask casing portion would, like the filter assembly, typically be of flexible fabric.

More specifically, the face mask casing portion may comprise a plurality of contiguous face-to-face layers of fabric, between two of which the filter assembly is located or locatable contiguously face-to-face.

In a typical embodiment of the invention, the face mask casing portion may comprise one or more of
one or more layers of synthetic fabric; and/or
one or more layers of antibacterial / antiviral fabric.

It is noted that, in some embodiments of the invention, the layer of synthetic fabric may be integrated with the layer of antibacterial / antiviral fabric, such that they are not two distinct layers.

The synthetic fabric may, for example, be a quick-drying fabric, e.g. nylon or polyester.

The antibacterial / antiviral fabric may, for example, be a copper-coated / copper-impregnated fabric, such as a fabric comprising or consisting copper-coated or copper-impregnated yarn.

The antibacterial / antiviral fabric may, in particular, comprise or consist of copper-coated / copper-impregnated nylon, coated or impregnated with from 4 000 to 10 000, and even up to 20 000, parts per million (ppm) copper, e.g. by melt-spinning of copper and nylon.

It is noted that, instead of copper, another metal with similar antibacterial / antiviral properties as copper, may be used. Copper is preferred though.

In one embodiment of the invention, the one or more layers of antibacterial / antiviral fabric may be terry fabric, preferably of copper-coated / copper-impregnated yarn as hereinbefore described.

The face mask casing portion may also include at least one or more layers of elastic fabric.

In a preferred embodiment of the invention, the face mask casing portion comprises four contiguous layers of fabric, including
a first layer of synthetic fabric, contiguous with
a first layer of antibacterial / antiviral fabric, contiguous with
a second layer of antibacterial / antiviral fabric, contiguous with
a second layer of synthetic fabric.

Thus, the face mask casing portion may comprise an outer portion of synthetic fabric and an inner portion of antibacterial / antiviral fabric.

In such a preferred embodiment, the filter assembly may be located or locatable between the two layers of antibacterial / antiviral fabric.

Optionally, all of the abovementioned layers of the preferred embodiment may be located within an outer shell of an elastic fabric.

It is a feature of the invention that the respiratory face mask article is typically seamless, both in respect of the filter assembly and in respect of the face mask casing portion, when provided.

The invention extends, as a separate aspect thereof, to a face mask casing portion as hereinbefore described with reference to the respiratory face mask of the invention.

In accordance with a further aspect of the invention is provided a respiratory face mask comprising
the respiratory face mask article of the invention, as hereinbefore described; and
mounting members, as hereinbefore described, configured to mount the face mask article to the face of a user such that the face mask article extends across the nose and mouth of the user.

In accordance with still a further aspect of the invention, there is provided a respiratory face mask kit comprising a face mask casing portion in accordance with the invention and a face mask filter assembly in accordance with the invention.

### DETAILED DESCRIPTION OF EXEMPLARY EMBODIMENTS

The invention will now be described in more detail by way of example only, with reference to the accompanying diagrammatic drawings.

In the drawings,
Figure 1 shows a respiratory face mask according to the invention in use, from the front of a user wearing the face mask;
Figure 2 shows the respiratory face mask in use of figure 1, from the side of the user wearing the face mask;
Figure 3 shows the respiratory face mask in use of figure 1, from the rear of the user wearing the face mask;
Figure 4 shows in three-dimensional front view the face mask worn by the user in Figures 1 to 3;
Figure 5 shows the sequence of fabric layers making up the face mask of figure 4, when the face mask is viewed cross-sectionally;
Figure 6 shows the sequence of fabric layers making up the respiratory face mask filter assembly according to the invention, incorporated in the face mask of Figures 1 to 4, when viewed cross-sectionally.

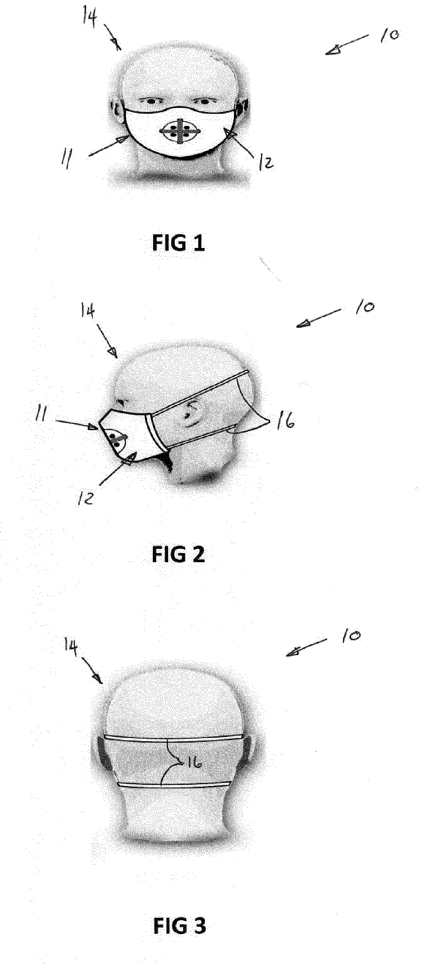

Referring to the drawings, and particularly to Figures 1 to 4, reference numeral 10 generally indicates a respiratory face mask 11 according to the invention, in use in which the face mask 11 is worn by a person (user) 14.

The face mask 11 comprises a respiratory face mask article 12 according to the invention and two elastic bands 16, respective ends of which are anchored to respective ends of the face mask article 12.

The elastic bands 16 serve as mounting members which mount the face mask article 12 to the face of the person 14, by extending around the back of the person's 14 head.

The face mask article 12 is mounted to the person's 14 face such that the face mask article 12 extends across the nose and mouth of the person 14. It will be seen that the face mask article 12 extends, in fact, across a major portion of the person's 14 face, covering their cheeks, cheekbones, chin and jaw.

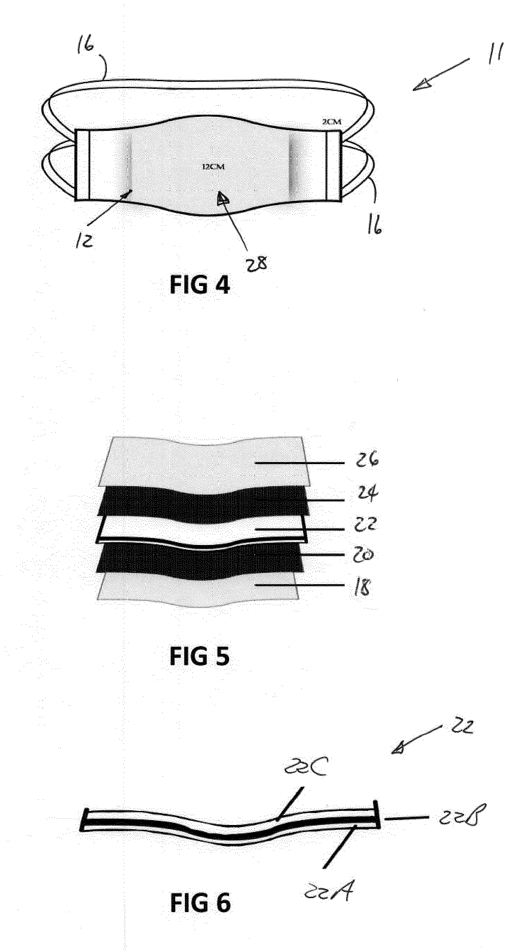

The face mask article 12 is multi-layered, comprising, with reference to Figure 5,
a first, outer, layer 18 of synthetic fabric, preferably quick-drying synthetic fabric e.g. polyester or nylon; face-to-face contiguous with
a second, inner, layer 20 of antibacterial / antiviral synthetic fabric, preferably terry fabric of copper-coated nylon yarn; face-to-face contiguous with
a third, inner, multilayer filter assembly 22 in accordance with the invention, as described in more detail below;
a fourth, inner, layer 24 of antibacterial / antiviral synthetic fabric, preferably terry fabric of copper-coated nylon yarn; face-to-face contiguous with
a fifth, outer, layer 26 of synthetic fabric, preferably quick-drying synthetic fabric e.g. polyester or nylon.

Thus, looking at Figures 1 and 4, the face mask article 12 comprises the first to fifth layers 18, 20, 22, 24, 26 starting from the front of the face mask article 12, furthest from the person's 14 face in use, to the rear of the face mask article 12, in contact with the person's 14 face in use.

The filter assembly 22 is therefore located between the second and fourth layers of antibacterial / antiviral synthetic fabric 20, 24. It would be appreciated that, thus, the first, second, fourth and fifth layers 18, 20, 24, 26 provide a face mask casing portion according to the invention.

Thus, the face mask article 12 comprises the face mask casing portion, comprising the first, second, fourth and fifth layers 18, 20, 24, 26, and the filter assembly 22.

The lateral position of the filter assembly 22 in the face mask article 12 is such that, in use, the filter assembly 22 extends across the nose and mouth of the person 14. Such a position would typically be a central location in the face mask article 12 when looking at it from the front, e.g. the location shown by reference numeral 28 in Figure 4. Thus, the filter assembly 22 provides or is located in a breathing zone of the face mask article 12, and thus of the face mask 11.

With reference to Figure 6, the filter assembly 22 comprises
a first, distal (operatively front) layer 22A of melt-spun non-woven fabric;
a second, intermediate, layer 22B of melt-spun non-woven fabric; and
a third, proximal (operatively rear) layer 22C of melt-spun non-woven fabric.

The melt-spun non-woven fabric of the first 22A, second 22B and third 22C layers are of polypropylene. The first 22A and third 22C layers of fabric each has a weight per area of about 70 gsm, and the second layer 22B of fabric has a weight per area of about 100 gsm.

The first 22A, second 22B and third 22C layers are located contiguously and face-to-face, with the second layer 22B being located between the first 22A and third 22C layers.

The first 22A and third 22C layers are respectively bonded to respective faces of second layer 22B. More specifically, bonding of the first layer 22A to the second layer 22B is full bonding across their entire contiguous faces.

Bonding of the third layer 22C to the second layer 22B is partial bonding along parts of their contiguous faces, specifically along peripheral edge portions of their contiguous faces. Thus, one or more portions, e.g. a central portion and/or one or more edge portions, of the contiguous faces of the third 22C and second 22B layers are loose from each other, i.e. not bonded to each other.

Bonding of the first 22A and third 22C layers to the second 22B layer was effected through the application of heat, i.e. by means of heat bonding.

More specifically, the first layer 22A was bonded to the second layer 22B by the application of heat at about 180°C for a predetermined time period, e.g. about 30 seconds.

Similarly, the third layer 22C was bonded to the second layer 22B by the application of heat at about 150°C for a predetermined time period, e.g. about 30 seconds.

In a removable filter assembly configuration, the filter assembly 22 is removably located or locatable in the face mask casing portion, i.e. such that the filter assembly 22 can be readily removed from the face mask casing portion and, optionally, be replaced with a washed filter assembly 22 or a new filter assembly 22.

Alternatively, in such a second embodiment, the face mask article 12 may, in a non-removable filter assembly configuration, comprise the face mask casing portion and the filter assembly 22 non-removably located therein, i.e. such that the filter assembly 22 is not readily removable from the face mask casing portion, e.g. such that it is integrated into the face mask casing portion.

### DISCUSSION

The respiratory face mask of the invention provides snug-fitting, seamless, pathogen resistant, washable, reusable defence against inhalation of airborne pathogens.

Resistance against pathogens is provided primarily by the filter assembly of the invention, but also effectively by the layers of antibacterial / antiviral fabric, specifically in respect of the use of copper which serves as an effective antibacterial / antiviral agent against pathogens contained on the skin of a user or that comes into contact with an exterior of the face mask.

The layers of antibacterial / antiviral fabric also defend the face mask against transferring pathogens that may have been picked up by the face mask when not in use, e.g. when placed on a surface that may contain a pathogen.

The face mask is believed to be effective as a pathogen barrier and to be user friendly in the following respects at least:
▪ the filter assembly acts as a physical barrier to pathogens drawn into the mask through breathing, from entering the respiratory system of a user, since the pathogens get caught up in the various layers of the filter assembly;
▪ the mask materials of which the mask is manufactured are quick-drying, thus rendering the mask conveniently and practically washable and reusable;
▪ the replaceability of the filter assembly likewise renders the mask reusable, at least in respect of the casing portion (it is believed that the filter assembly would need replacing when it tears or breaks open);
▪ the mask is seamless that contributes to its antibacterial / antiviral integrity and to its wearing comfort;
▪ the mask is recyclable in respect of the materials of which it is manufactured;
▪ the mask is odourless due to the inclusion of the layer of antibacterial / antiviral fabric;
▪ the configuration of the mask such that it extends far across the nose, mouth, cheeks, cheekbones, jawbone and chin of a user prevent air and particles from entering the side of the mask;
▪ the elastic bands in use extend around the base of the neck and back of the head, thus preventing irritation experienced when located behind the ears of a user;
▪ the flexible material of construction results in the mask following the contours of the face, which contributes to comfort and avoids skin marks forming, also ensuring integrity of sealing against the skin; and
▪ the configuration of the mask in a manner that renders it snugly and comfortably wearable avoids unnecessary constant touching of the mask to adjust it for comfort, which is obviously desirable further to avoid infection.

As noted above, it may be necessary to wash the mask and/or the filter assembly from time to time, in order to reuse it, which reusability is a feature of the invention.

When washing the mask, the following would be advised:
▪ wash at 40°C;
▪ wash using washing powder in water for 15 minutes;
▪ sun dry;
▪ iron flat with hot iron; and
▪ do not machine wash or tumble dry.

When washing the filter assembly, the following would be advised:
▪ wash at 40°C;
▪ wash using washing powder in water for 10-15 minutes;
▪ hand squeeze;
▪ sun dry;
▪ iron flat with hot iron; and
▪ do not machine wash or tumble dry.

It is to be understood that the invention is not limited to the specific details described herein, which are given by way of example only, and that various modifications and alternations are possible without departing from the scope of the invention as defined in the claims.

## Claims

1. A seamless respiratory face mask configured to be worn on the face of a user such that it extends across the nose and mouth of the user, the face mask comprising multiple layers of flexible fabric that includes, in series,
a first, outer, layer of synthetic fabric, preferably quick-drying synthetic fabric e.g. polyester or nylon; face-to-face contiguous with
a second, inner, layer of antibacterial / antiviral synthetic fabric, preferably terry fabric of copper-coated nylon yarn; face-to-face contiguous with
a third, inner, layer of synthetic non-woven fabric of lighter weight per area (gsm), preferably 70 gsm polypropylene; face-to-face contiguous with
a fourth, innermost, layer of synthetic non-woven fabric of heavier weight per area (gsm), preferably 100 gsm polypropylene; face-to-face contiguous with
a fifth, inner, layer of synthetic non-woven fabric of lighter weight per area (gsm), preferably 70 gsm polypropylene; face-to-face contiguous with
a sixth, inner, layer of antibacterial / antiviral synthetic fabric, preferably terry fabric of copper-coated nylon yarn; face-to-face contiguous with
a seventh, outer, layer of synthetic fabric, preferably quick-drying synthetic fabric e.g. polyester or nylon.

2. A face mask as claimed in Claim 1, in which the third, fourth and fifth layers are provided by a face mask filter assembly;
the first, second, sixth and seventh layers are provided by a face mask casing portion;
the first to seventh layers are provided by a face mask article and in which at least some of the layers of fabric are elastic, for wearing comfort and integrity of mounting.

3. A face mask as claimed in Claim 2, in which the respiratory face mask filter assembly comprises a plurality of layers of melt-spun non-woven fabric, including at least one heavier weight per area (grams per square meter, or "gsm") layer of melt-spun non-woven fabric and at least one lighter weight per area (gsm) layer of melt spun non-woven fabric, located contiguously face-to-face.

4. A face mask as claimed in Claim 3, in which the face mask filter assembly comprises:
a first layer of melt-spun non-woven fabric;
a second layer of melt-spun non-woven fabric; and
a third layer of melt-spun non-woven fabric,
wherein
the first, second and third layers are located contiguously and face-to-face;
the second layer is located between the first and third layers;
the first and third layers are respectively bonded to respective faces of second layer; and
the first and third layers have weight per area specifications smaller than the second layer; whereby in use, the filter assembly may provide or be located in a breathing zone of a respiratory face mask worn by a user, thus in use being located over the nose and mouth of the user, for the user to breathe through at least a part of the filter assembly.

5. A face mask as claimed in Claim 4 in which the melt-spun non-woven fabric of the first, second and third layers is polypropylene;
optionally, the first and third layers of fabric each has a weight per area of about 70 gsm, and the second layer of fabric has a weight per area of about 100 gsm.

6. A face mask as claimed in any one of Claims 2 to 5, in which the first layer is an operatively distal layer that would be located, in use, distally from the face of a user of a respiratory face mask that includes the filter assembly;
the third layer is operatively proximal layer that would be located, in use, proximally to the face of a user of a respiratory mask that includes the filter assembly; and
the second layer is an operatively intermediate layer, located between the distal (first) and proximal (third) layers in use.

7. A face mask as claimed in Claim 6, in which bonding of the first layer to the second layer is full bonding across their entire contiguous faces;
bonding of the third layer to the second layer is a partial bonding along parts of their contiguous faces, e.g. along peripheral edge portions of their contiguous faces, whereby, one or more portions, e.g. a central portion and/or one or more edge portions, of the contiguous faces of the third and second layers may be loose from each other, i.e. not bonded to each other;
optionally, bonding of the first and third layers to the second layer is effected through the application of heat, i.e. by means of heat bonding;
optionally, the first layer is bonded to the second layer by the application of heat at about 180°C for a predetermined time period, e.g. about 30 seconds; and
optionally, the third layer is bonded to the second layer by the application of heat at about 150°C for a predetermined time period, e.g. about 30 seconds.

8. A method of making a respiratory face mask filter assembly as claimed in any one of Claims 2 to 7, by contiguously locating a plurality of layers of melt-spun non-woven fabric, comprising at least one heavier weight per area (gsm) layer of melt-spun non-woven fabric and at least one lighter weight per area (gsm) layer of melt spun non-woven fabric.

9. A method of making a respiratory face mask filter assembly as claimed in Claim 8, in which the method includes locating contiguously face-to-face three layers of melt-spun non-woven fabric, and then bonding the first and third layers respectively to the second layer.

10. A respiratory face mask article that comprises a respiratory face mask filter assembly as claimed in any one of Claims 2 to 7, the face mask article being configured to be mounted to, and thus worn, on the face of a user, such that the face mask filter extends at least across the nose and mouth of the user;
the face mask article comprising mounting members configured to mount the face mask article to the face of a user, wherein the face mask article and the mounting members thus provide a face mask;
optionally, the mounting members comprises one or more elastic bands that locate, in use, at the back of a user's head or, although less desirably, behind a user's ears, thus locating the face mask article across the nose and mouth of the user.
optionally, the face mask article includes a face mask casing portion in which the filter assembly is located;
optionally, the face mask article comprises the face mask casing portion and the filter assembly removably located or locatable in the face mask casing portion, whereby that the filter assembly may be readily removed from the face mask casing portion and, optionally, be replaced with a washed filter assembly or a new filter assembly; and
alternatively, the face mask article, in a non-removable filter assembly configuration, comprises the face mask casing portion and the filter assembly non-removably located therein, whereby that the filter assembly is not readily removable from the face mask casing portion.

11. A respiratory face mask article as claimed in Claim 10, in which the face mask casing portion comprises a plurality of contiguous face-to-face layers of fabric, between two of which the filter assembly is located or locatable contiguously face-to-face;
optionally, the face mask casing portion comprises one or more of
one or more layers of synthetic fabric; and/or
one or more layers of antibacterial / antiviral fabric;
optionally, the layer of synthetic fabric is integrated with the layer of antibacterial / antiviral fabric, such that they are not two distinct layers;
optionally, the synthetic fabric is quick-drying fabric, e.g. nylon or polyester.

12. A respiratory mask article as claimed in Claim 11, in which the antibacterial / antiviral fabric is a copper-coated / copper-impregnated fabric, such as a fabric comprising or consisting copper-coated or copper-impregnated yarn;
optionally, the antibacterial / antiviral fabric comprises of copper-coated / copper-impregnated nylon, coated or impregnated with from 4 000 to 10 000, and even up to 20 000, parts per million (ppm) copper, e.g. by melt-spinning of copper and nylon;
optionally, instead of copper, another metal with similar antibacterial / antiviral properties as copper, may be used; and
optionally, the one or more layers of antibacterial / antiviral fabric is terry fabric, preferably of copper-coated / copper-impregnated yarn.

13. A face mask as claimed in any one of the preceding claims, in which the face mask casing portion comprises four contiguous layers of fabric, including
a first layer of synthetic fabric, contiguous with
a first layer of antibacterial / antiviral fabric, contiguous with
a second layer of antibacterial / antiviral fabric, contiguous with
a second layer of synthetic fabric;
optionally, the face mask casing portion comprises an outer portion of synthetic fabric and an inner portion of antibacterial / antiviral fabric;
optionally, the filter assembly is located or locatable between the two layers of antibacterial / antiviral fabric.

14. A face mask as claimed in Claim 13, in which all of the layers of the face mask casing portion are located within an outer shell of an elastic fabric;
optionally, the respiratory face mask article is typically seamless, both in respect of the filter assembly and in respect of the face mask casing portion.

15. A face mask as claimed in any one of the preceding claims, comprising mounting members, configured to mount the face mask article to the face of a user such that the face mask article extends across the nose and mouth of the user; and
optionally comprising a respiratory face mask kit including a face mask casing portion and a face mask filter assembly.
